Europäisches Patentamt

European Patent Office

Office européen des brevets

(19)

(11) Publication number: **0 365 465**
**A2**

# EUROPEAN PATENT APPLICATION

(12)

(21) Application number: 89630189.2

(22) Date of filing: 10.10.89

(51) Int. Cl.5: **B60C 9/09** , **B60C 19/00**

(30) Priority: 17.10.88 US 258347

(43) Date of publication of application:
25.04.90 Bulletin 90/17

(84) Designated Contracting States:
DE ES FR GB

(71) Applicant: THE GOODYEAR TIRE & RUBBER COMPANY
1144 East Market Street
Akron, Ohio 44316-0001(US)

(72) Inventor: Reuter, René François
2 um Kettenhouscht
L-9142 Burden(LU)

(74) Representative: Weyland, J.J. Pierre
Goodyear Technical Center-Luxembourg
L-7750 Colmar-Berg(LU)

(54) Tubeless tire containing a barrier ply.

(57) A tubeless tire (10) has a barrier ply (12) interposed between a liner (14) and a carcass ply (16) to restrict intrusion of the liner material into the spaces between the cables of the carcass ply (16). The barrier ply (12) has warp yarns (32) of side-by-side filaments (36) and the warp yarns have a yarn twist of zero. Each of the warp yarns (32) has a cross sectional shape such that the greatest linear dimension (38) of the cross-section is two to five times the linear cross-sectional extent (40) of the warp yarn as measured perpendicular to said greatest cross-sectional extent (38).

EP 0 365 465 A2

FIG.2

## TUBELESS TIRE CONTAINING A BARRIER PLY

The present invention relates to the employment of a barrier ply in a tubeless pneumatic tire.

The liner of a pneumatic tire is a layer of low permeability elastomeric material positioned inside the tire to minimize air loss. Butyl rubber and other materials typically used as liners have exhibited the characteristic of extruding into regions between the parallel cords or cables of the adjacent carcass reinforcement ply, particularly in radial ply tires. A known method for preventing the intrusion of the liner material into the spaces between the parallel cords or cables of a carcass ply is to add to the tire a "barrier" ply disposed between the liner and carcass ply. A separate reinforcement material can be utilized for this purpose, as is illustrated in U.S. Patent 3,165,138.

It is known from EPO Published Application 172,294 that a barrier ply may comprise a plurality of cords or cables with a greater density of cords per inch (2.54 cm) of width than in the carcass ply. Although there is some latitude for varying the cord density in a barrier ply, the cords may become spaced too far apart or too close together for adequate stress distribution or adhesion to the elastomer in which the cords are embedded. The barrier ply disclosed herein comprises a fabric having a lower end count, less thickness and lower weight than fabrics known to be presently in use in barrier plies.

Exemplary embodiments of the invention are illustrated in the drawings which are a part of this specification, in which:

Fig. 1 is a cross sectional view of a tire according to the invention;

Fig. 2 illustrates a fabric used in the barrier ply of a tire according to the invention;

Fig. 3 is a cross sectional view of the fabric of Fig. 2.

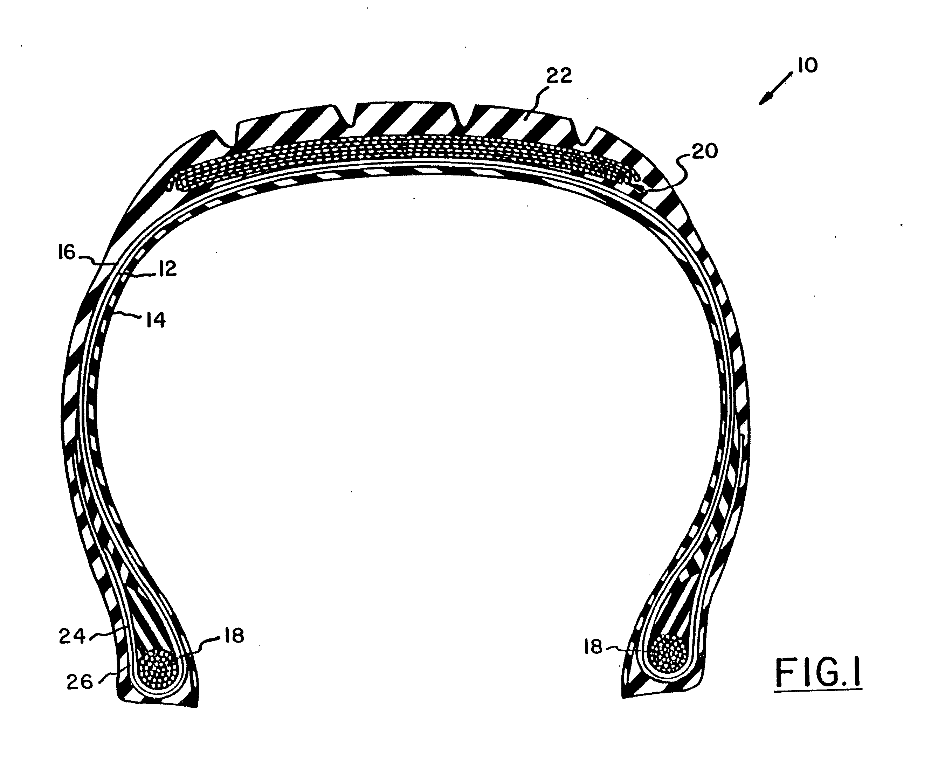

With reference to Fig. 1, there is illustrated a tire 10 having a barrier ply 12 which is interposed between a substantially gas impermeable liner 14 and a carcass ply 16. The barrier ply 12 comprises fabric of the type disclosed in the following text, and has the warp yarns of the fabric oriented at 60° to 90° with respect to circumferential lines of the tire. "Circumferential" lines are circles disposed in planes that are perpendicular to the tire's axis of rotation and have centers that are located on said axis.

A tire according to the invention may further comprise a pair of annular beads 18, a belt structure 20 and a tread 22. The carcass ply 16 and barrier ply 12 may be folded around the beads as illustrated at 24 and 26.

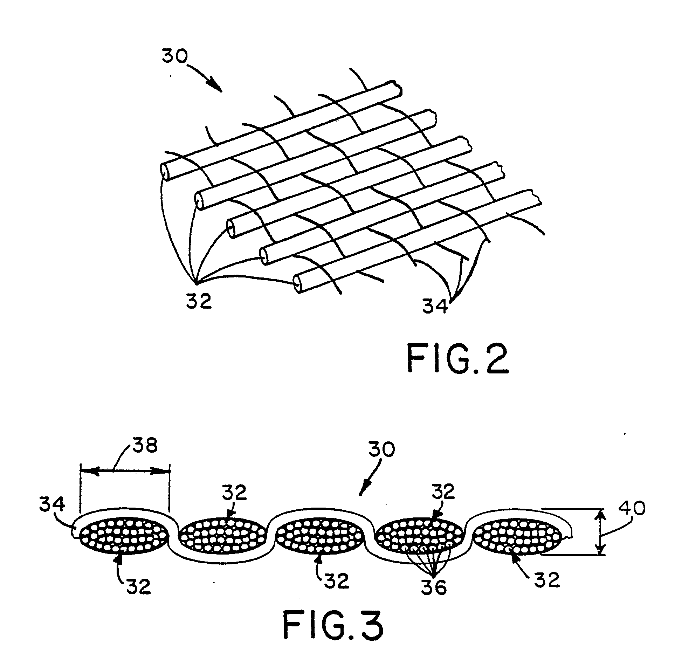

Figs. 2 and 3 show a fabric 30 which is employed as the barrier ply 12 and comprises warp yarns 32 and weft yarns 34 which extend substantially perpendicular to the warp yarns and are interwoven therewith. Weft yarns 34 generally do not act as reinforcing elements of the fabric but are used to control the spacing of the warp yarns and thereby the packing density of the warp yarns in the fabric. Preferably, the weft yarns 32 have an elongation at break of at least 150%, and in a barrier ply the fabric has forty to one hundred and twenty, most preferably sixty to eighty, weft yarns per meter as measured parallel to said warp yarns. Fabric 30 used in the practice of the invention can be manufactured on conventional weaving equipment.

The warp yarns 32 of the present invention comprise at least two side-by-side filaments 36 which are not twisted together, i.e., the yarns consist of a bundle of parallel filaments having zero yarn twist. Each warp yarn consists of a plurality of filaments 36 (which is understood to mean two or more filaments) of at least one material selected from the group consisting of aliphatic or aromatic polyamides, polyesters and rayons. Each warp yarn in the barrier ply has a denier in the range of four hundred to three thousand. As used herein "denier" is understood to mean the weight in grams of nine thousand meters of a yarn. Preferably, each warp yarn comprises at least one hundred nylon (aliphatic polyamide) filaments and the warp yarns each have a denier in the range of seven hundred fifty to one thousand. As used herein and in the claims the terms "consists of" and "consisting of" are understood to limit a warp yarn to only the side-by-side filaments and precludes any other component, such as a filament spirally wrapped around the side-by-side filaments.

Fig. 3 illustrates that the noncircular cross-sectional shape of the warp yarns 32 allows a particularly dense packing of the filaments. The volume of the interstices between the noncircular warp yarns 32, as compared to the prior art circular cross section yarns, having been considerably reduced. Such yarns 32 can be manufactured by the well known processes of heat drawing, followed by dipping, or the process can be reversed by first dipping and then heat drawing the polymeric material. The coating, drawing and heat treating process may be adjusted to give the yarns of the fabric the physical properties such as strength, shrinkage, elongation, modulus, etc. desired by a tire engineer for a particular tire. It has been discovered that these warp yarns 32 having no yarn twist are capable of absorbing in a conventional dipping process a high amount of coating solution. Since the multi-filament yarns without twist can be fully impregnated, they can be advantageously used in pneumatic tires.

Analyses of the cross section of impregnated warp yarns 32 have shown that the adhesive component is distributed throughout the yarn, filling up all interstices and thereby bonding loose filaments together to form a substantially uniform filament/rubber composite.

Whereas yarns or cords used in prior art barrier plies typically could absorb between 5% and 10% of their weight in coating solution, the warp yarns of the fabric of the present invention can absorb more than 10% of their weight in adhesive solution as the following example will show.

## EXAMPLE

Fabric used as a barrier ply in the practice of the invention comprised on an 840 denier multi-filament yarn of Nylon 6,6 (comprising 140 filaments) woven with olboplast™ 25 weft cords into a fabric having 22 ends per inch (EPI). A prior art barrier ply fabric comprises 840/1 denier multi-filament yarn of Nylon 6,6 with a twist of 472 turns per meter was woven into a ply having 36 EPI. Both woven fabrics were impregnated with the same adhesive solution, heat treated and drawn in a conventional dipping process. After the fabrics had been dried, samples of the individual warp yarns were separated from the fabric for analysis. The following table summarizes the test results:

TABLE I

|  | Fabric used in invention | Fabric used in prior art |
|---|---|---|
| Breaking strength: | 82 Newtons | 74 Newtons |
| Ultimate elongation: | 19% | 21.5% |
| Load at 1% elongation: | 5.9 Newtons | 3.52 Newtons |
| 2% elongation: | 9.3 Newtons | 6.08 Newtons |
| 3% elongation: | 11.8 Newtons | 8.00 Newtons |
| 4% elongation: | 15.3 Newtons | 9.89 Newtons |
| 7% elongation: | 24.8 Newtons | 17.17 Newtons |
| 14% elongation: | 67.6 Newtons | 46.96 Newtons |

In a preferred embodiment of the invention, the warp yarns have a reduced thickness as compared to the fabric of the prior art. It is well known in the art that a fabric of reduced thickness results in a tire component ply of lesser weight and in a ply that has a greater flexibility.

Fig. 3 shows an enlarged view of a cross section of a fabric ply according to Fig. 2 wherein the warp yarns 32 of the fabric have a cross sectional shape which is substantially rectangular. The larger dimension (width) 38 of the cross section extends in the direction of the weft cords 34 and the smaller dimension (thickness) 40 of the cross section extends perpendicular thereto. It is preferred that the larger dimension be about 2 to 5 times the smaller dimension. Put another way, each of the warp yarns 32 has a cross-sectional shape, taken perpendicular to the longitudinal axis of the yarn, with the greatest linear cross-sectional extent 38 of the cross-section being two to five times the linear cross-sectional extent 40 of the warp yarn as measured perpendicular to said greatest cross-sectional extent 38. It is preferred that in a tire 10 according to the invention the warp yarns 32 of the barrier ply 12 be disposed such that the greatest linear extent 38 of each warp yarn lies in a plane that is perpendicular to the axis of the rotation of the tire.

In the example referred to above, the following dimensions were measured on the impregnated yarns:
thickness (40): 0.30 ± 0.05 mm
width (38): 0.90 ± 0.10 mm

This represents a substantial reduction in thickness over the prior art yarns which have a thickness of at least 0.4 mm.

The amount of protection against liner material infiltration of a carcass ply that the fabric can provide as a barrier ply is a function of the packing density of the warp yarns, i.e., the relative width of the warp yarns, and their relative spacing.

While certain representative embodiments have been shown for the purpose of illustrating the invention, it will be apparent to those skilled in the art that various changes and modifications may be made therein without departing from the spirit or scope of the invention.

**Claims**

1. A tire (10) comprising a barrier ply (12) which is disposed between a substantially air impermeable liner (14) and a carcass ply (16), said barrier ply (12) comprising a plurality of warp yarns (32) extending parallel to one another and oriented at 60° to 90° with respect to circumferential lines of the tire, a plurality of weft yarns (34) extending substantially perpendicular to said warp yarns and interwoven therewith, characterized by each warp yarn (32) having a yarn twist of zero and consisting of at least two side-by-side filaments (36), said filaments each comprising at least one material selected from the group consisting of aliphatic or aromatic polyamides, polyesters and rayons, said weft yarns (34) having an elongation of at least 150% at break, each of said warp yarns (32) having a cross sectional shape taken perpendicular to the longitudinal axis of the yarn with the greatest linear cross-sectional extent (38) of said cross-section being 2 to 5 times the linear cross-sectional extent (40) of the warp yarn as measured perpendicular to said greatest cross-sectional extent.

2. A tire (10) according to claim 1 characterized by each of said warp yarns (32) having a greatest linear cross-sectional extent (38) of about .9 mm, and the average cross-sectional extent (40) as measured perpendicular to said greatest cross-sectional extent being about .3 mm.

3. A tire (10) as claimed in any of the preceding claims characterized by each warp yarn (32) of said barrier ply (12) having a denier of 400 to 3,000.

4. A tire (10) as claimed in any of the preceding claims characterized by each warp yarn (32) of said barrier ply (12) comprising at least 100 nylon filaments (36), each warp yarn having a denier of 750 to 1,000, and there being 18 to 26 warp yarns per 2.54 cm as measured perpendicular to said warp yarns.

5. A tire (10) as claimed in any of the preceding claims characterized by said barrier ply (12) having 40 to 120 weft yarns (34) per meter as measured parallel to said warp yarns (32).

FIG.1

EP 0 365 465 A2

FIG.2

FIG.3